# EUROPÄISCHE PATENTANMELDUNG

(11) **EP 2 431 923 A1**
(43) Veröffentlichungstag der Anmeldung: **21.03.2012**
(21) Anmeldenummer: 10075487.8
(22) Anmeldetag: 20.09.2010
(51) Int. Cl.: G06K 19/06

(54) **Elektrolythaltiger Informationsträger**

(71) Anmelder: Printechnologics GmbH, 09112 Chemnitz (DE)
(72) Erfinder: Kreutzer, André, 09648 Mittweida (DE)
(74) Vertreter: Lange, Sven

(57) **Zusammenfassung**

Die Erfindung beschreibt einen Informationsträger, der ein elektrisch nicht leitfähiges Substrat umfasst, auf das bereichsweise ein Elektrolyt aufgebracht ist.

## Beschreibung

Die Erfindung betrifft einen Informationsträger, der mindestens ein Elektrolyt und ein Substrat umfasst, wobei das Substrat eine elektrisch nicht leitfähige Schicht ist und bereichsweise vom Elektrolyt bedeckt ist. Weiterhin betrifft die Erfindung die Verwendung des Informationsträgers und dessen Herstellung.

Der Stand der Technik offenbart mehrere Möglichkeiten, mittels Drucktechniken oder anderen Beschichtungsverfahren Informationsträger herzustellen, welche mittels geeignetem Leseverfahren bzw. Lesegerät ausgelesen werden können. Die wohl am meisten verbreiteten derart hergestellten Informationsträger sind Barcodes in der Ausführung als eindimensionaler Strichcode oder beispielsweise als zweidimensionale Varianten. Diese werden mit geeigneten optischen Scannern erfasst und gegebenenfalls über entsprechende Datenverarbeitungssysteme weiterverarbeitet.

Die Drucktechniken und Beschichtungstechniken zur Herstellung solcher Merkmale entwickeln sich ebenso weiter. So beschreibt die EP 1 803 562 ein Verfahren zum Transfer von bildgebenden Schichten von einer Trägerfolie bzw. Transferfolie auf Druckbogen in einer bogenverarbeitenden Maschine. Dabei wird in einem ersten Auftragswerk ein Kleber aufgebracht und in einem weiteren Beschichtungswerk mit einer Transferfolie zusammengefahren und Material von der Transferfolie durch Anhaftung auf die Druckbogen aufgebracht. Dabei wird in dem Beschichtungswerk ein Transferspalt gebildet und die Transferfolie an der Oberfläche einer Presswalze entlang mit der mit Transfermaterial beschichteten Seite auf einem Druckbogen aufgelegt und unter Druck gemeinsam mit diesem durch den Transferspalt geführt, so dass die bildgebenden Schichten in mit Kleber versehenen Bereichen von der Trägerfolie auf den Druckbogen haftend übertragen werden. Damit können ohne weiteres Barcodes und alphanumerische Informationen aufgebracht werden.

Im Stand der Technik werden weiterhin in US 5,818,019, US 3,719,804, US 4,587,410 und US 2006/0118612 flächige gedruckte Materialien offenbart, die eine sichere Verifikation oder Validierung von Daten erlauben. Dies kann beispielsweise für Medikamente und ihre Verpackungen, aber auch für Lotterielose sinnvoll sein. Die aufgedruckten Informationen stellen z. B. die Authentifizierung sicher oder dienen der Gültigkeitsprüfung. Auch kapazitiv auslesbare Informationsträger sind u. a. aus den Anmeldungen US 3,719,804 (permanenter Informationsspeicher) und US 4,587,410 (Parksystem) bekannt. Im letztgenannten Beispiel ist die Bearbeitung und Veränderbarkeit von kapazitiven Strukturen für ein Parkmeter dargestellt. Mittels mechanischer Einheit wird die kapazitive Struktur im Lesegerät sukzessive verändert und so ihr "innerer Wert" verändert. Eine Individualisierung der Strukturen ist nicht vorgesehen. Das komplette System ist ein autarkes System ohne Interaktion zu anderen Systemen oder einer Datenverarbeitung bzw. Datenspeicherung. In US 3,719,804 sind die Herstellmöglichkeiten mittels Drucktechniken wie beispielsweise Siebdruck, Flexodruck und Tiefdruck aufgeführt. Die Individualisierung erfolgt mittels Trenntechniken der aufgebrachten Leiterzüge. Das Ausleseverfahren ist stark positionsabhängig und ist mit einer festen Ausleseposition des Informationsträgers im Lesegerät verbunden.

Die DE 20 2006 013 070 U1 offenbart Verfahren und Mittel zur Erzeugung von Strukturen aus Funktionsmaterialen, die beispielsweise für Spielkarten angewendet werden können, wobei die Spielkarten eine Code-Anordnung aufweisen, die durch einen Computer visualisiert werden können. In der Schrift DE 10 2008 013 509 A1 wird ein steganografisches Verfahren dargestellt, welches mittels Transferfolientechnik Sicherheitsmerkmale in Druckprodukten erzeugen kann. Die Verifikation der Merkmale erfolgt optisch mittels Dekoder. Weiterhin ist ein Sicherheitsmerkmal aus DE102006031795A1 bekannt, welches mittels Transferfolientechnik erzeugt wurde. In diesem Verfahren werden Widerstände bzw. Widerstandsnetzwerke in Druckprodukte eingebracht welche ein Sicherheitsmerkmal darstellen sollen. Die Verifikation erfolgt kontaktbehaftet mittels eines Lesegeräts, welches die Widerstände nach dem ohmschen Prinzip misst.

Nachteile am Stand der Technik sind beispielsweise:
- Relativ aufwändig individualisierbar, Informationsträger erhalten oft in nachgelagerten Prozessschritten eine Individualisierung ihrer Information
- Kapazitiv auslesbare Informationsschichten/Informationsträger sind nach dem Stand der Technik sichtbar oder leicht detektierbar, hinderlich bei Anwendungen, bei denen dies dem Einsatzzweck entgegensteht (Kopierschutz, Bezahl- oder Zugangssysteme etc.)
- Begrenzt umweltfreundlich, oft lösemittelhaltige leitfähige Kleber und Farben und/oder nicht kompostierbare Metalle
- Relativ hoher Materialaufwand durch mehrstufige Verfahren, Trocknungs- und/oder Abliegezeiten entstehen
- Relativ kostenintensiv
- Relativ anfällig gegenüber Biegung und vor allem Knicken
- Nur größere Produktionen sind rentabel, kleine und mittlere Auflagen sind unwirtschaftlich
- Substrate dürfen nicht zu saugfähig und rau sein, dies (zer-)stört die leitfähigen Schichten, Ausfälle sind die Folge

Ausgehend von diesem Stand der Technik ist es die Aufgabe der vorliegenden Erfindung, einen Datenträger herzustellen, der nicht die Nachteile und Mängel des Stands der Technik aufweist.

Gelöst wird die Aufgabe durch die unabhängigen Ansprüche. Vorteilhafte Ausführungsformen ergeben sich aus den Unteransprüchen.

Es war völlig überraschend, dass ein Informationsträger bereitgestellt werden kann, der nicht die Nachteile des Stands der Technik aufweist, wobei der Informationsträger mindestens einen Elektrolyten und ein Substrat umfasst und das Substrat eine elektrisch nicht leitfähige Schicht ist und der Elektrolyt bereichsweise auf dem Substrat auf- und/oder eingebracht vorliegt. Überraschenderweise kann der erfindungsgemäße Informationsträger mit einem Gerät interagieren, welches einen Flächensensor umfasst, wobei der Informationsträger bevorzugt kapazitiv auslesbar ist. Der Elektrolyt wird bevorzugt bereichsweise in einer Schicht, insbesondere strukturierten Schicht auf das Substrat auf- oder eingebracht. Dem Fachmann ist bekannt, dass eine Flüssigkeit in beispielsweise ein Substrat diffundieren oder penetrieren kann, wobei die Flüssigkeit auch auf dem Substrat vorliegen kann. Der Elektrolyt kann bevorzugt strukturiert, insbesondere als strukturierte Elektrolytschicht vorliegen. Vorteilhafterweise kann der auf- oder eingebrachte Elektrolyt bereichsweise, mittels additiver und/oder subtraktiver Verfahren, bevorzugt durch Inkjetverfahren und besonders bevorzugt durch Laserverfahren in seiner Strukturierung verändert wird.

Der Elektrolyt bezeichnet im Sinne der Erfindung insbesondere eine chemische Verbindung, die in Lösung oder Schmelze in Ionen dissoziiert vorliegt. Zu diesen Stoffen gehören Säuren, Basen und Salze. In Wasser bzw. wasserähnlichen Lösungsmitteln ist die Dissoziation in Ionen nicht immer vollständig, so dass sich nach der Lage des Dissoziationsgleichgewichts schwache Elektrolyte (sind nicht vollständig dissoziiert) und starke Elektrolyte (sind auch in konzentrierter Lösung vollständig dissoziiert) unterscheiden lassen. Die Anwesenheit von Elektrolyten ist die Voraussetzung für alle Elektrolyse-Prozesse, für viele Osmose-Vorgänge, für die Aufrechterhaltung des Säure-Basen-Gleichgewichts im tierischen Organismus, für den Mineralstoffwechsel der Pflanzen und für die Bereitstellung von Pflanzennährstoffen im Boden. In der Technik spielen Elektrolyte aufgrund ihrer Salzeffekte eine Rolle als Ausflockungs- und Aussalz-Mittel.

Eine Sonderstellung der Elektrolyten nehmen die sogenannten Ampholyte und die Polyelektrolyte ein. Ampholyte bezeichnen insbesondere amphotere elektrolytische Verbindungen, die sowohl saure als auch basische hydrophile Gruppen besitzen und sich also je nach Bedingung sauer oder basisch verhalten. Ampholyte umfassen beispielsweise aliphatische Polyamine mit Carboxy-, Sulfo- oder Phosphono-Seitenketten. Polyelektrolyte bezeichnen insbesondere ionische Polymere mit einer großen Zahl ionisch dissoziierbarer Gruppen, die integraler Bestandteil der Polymerhauptkette sein können oder aber an diese seitlich angehängt sind. Es ist bevorzugt, dass der Elektrolyt fest, flüssig, gelartig oder pastös ist.

Der Elektrolyt kann bevorzugt als Punkt, Strich, Kurve, Fläche und/oder deren Kombinationen auf das Substrat aufgebracht sein. Der Fachmann erkennt gemäß der Offenbarung der vorliegenden Erfindung, dass der aufgebrachte Elektrolyt Eckpunkte und/oder durch Kurven definierte Füllflächen formt, beispielsweise Rechtecke, Kreise oder ähnlichen Figuren. Die Ortsbeziehungen der Teilbereiche zueinander (Orientierung, Anzahl, Ausrichtung, Abstand und/oder Position) und/oder die Form der Teilbereiche stellen bevorzugt eine Information dar. Es ist bevorzugt, dass der strukturierte Elektrolyt durch einen Flächensensor und/oder ein einen Flächensensor beinhaltendes Gerät erkannt, erfasst und datentechnisch weiterverarbeitet wird. Es ist weiterhin bevorzugt, dass der strukturierte Elektrolyt durch eine Leseeinrichtung, deren Elektrodenanordnungen so ausgebildet und angeordnet sind, dass die Anzahl, Größe, Form und/oder Lage des strukturierten Elektrolyts des Informationsträgers erkannt, erfasst und datentechnisch weiterverarbeitet wird. Der Informationsträger wird bevorzugt kapazitiv ausgelesen. Bei der Positionierung des Informationsträgers an einem Flächensensor oder in einem kapazitiven Lesegerät, wird die aufgebrachte Struktur interpretiert, so dass aus den Teilbereichen der Struktur eine codierte Information bestimmbar ist, beispielsweise in Form einer binär codierten Zahl. Es ist jedoch genauso ein Informationsträger direkt als solcher interpretierbar. Das Positionieren kann dabei auch durch eine Relativbewegung des Informationsträgers zum Flächensensor erfolgen. Es ist bevorzugt, dass der Flächensensor in einer Bewegung relativ zum Informationsträger fortschreitend vollständig oder teilweise Informationen von dem Informationsträger erhält. Dabei können auch in Abhängigkeit der Positionen des Informationsträgers gegenüber dem Flächensensor verschiedene Ereignisse erzeugt werden. Ausschlaggebend dazu ist beispielsweise die Bewegungsrichtung oder Verweildauer des Informationsträgers gegenüber dem Flächensensor.

Im Sinne der Erfindung ist ein Flächensensor insbesondere kapazitiver Flächensensor eine physikalische Schnittstelle zur Erfassung von elektrischen Kapazitäten und/oder Kapazitätsunterschieden innerhalb von Teilbereichen einer definierten Fläche. Flächensensoren beinhaltende Geräte umfassen beispielsweise Smartphones, Handys, Displays, Tablet-PCs, Tablet-Notebooks, Tochpad-Geräte, Grafiktabletts, Fernseher, PDAs, MP3-Player, Trackpads und/oder kapazitive Eingabegeräte. Ein solcher Flächensensor kann beispielsweise auch Bestandteil von Eingabegeräten als Touchscreen, Touchpad oder Grafiktablett sein. Touchscreens sind auch als Tastschirm oder Sensorbildschirm bekannt. Derartige Eingabegeräte werden unter anderem in Smartphones, PDAs, Touchdisplays oder Notebooks eingesetzt. Der Informationsträger kann bevorzugt in Verbindung mit einem Flächensensor einer Aktion eines Datenverarbeitungssystem zugeordnet werden oder diese auslösen. Ein Ereignis bezeichnet im Sinne der Erfindung insbesondere Dasjenige, was eine Aktion und damit eine Zustandsveränderung, bevorzugt innerhalb von Anwendungen, auslöst. Diese Ereignisse können beispielsweise Benutzereingaben oder Systemereignisse sein.

Die Erfindung betrifft auch eine Gruppe von Informationsträgern umfassend mehrere Informationsträger, wobei mindestens eine Farbschicht, Kleberschicht, Papierschicht und/oder Folie jeweils wenigstens als Hintergrund, Überdeckung, Zahl, Buchstabe, Zeichen, graphische Darstellung und/oder bildliche Darstellung oder einer Kombination hiervon aufgebracht ist, wobei
- mehrere Informationsträger eine gleiche Struktur des Elektrolyts und mindestens eine gleich gestaltete Farbschicht besitzen, so dass eine in sich geschlossene Gruppe von informationstechnisch und optisch gleichen Informationsträgern realisiert sind,
- mehrere Informationsträger eine gleiche Struktur des Elektrolyts und mindestens eine unterschiedlich gestaltete Farbschicht aufweisen, so dass eine Gruppe von informationstechnisch gleichen, aber optisch unterschiedlichen, Informationsträgern realisiert sind,
- mehrere Informationsträger eine ungleiche Struktur des Elektrolyts und mindestens eine gleich gestaltete Farbschicht aufweisen, so dass eine Gruppe informationstechnisch eindeutiger, aber optisch gleicher, Informationsträger realisiert sind,
- mehrere Informationsträger eine ungleiche Struktur des Elektrolyts und mindestens eine ungleich gestaltete Farbschicht aufweisen, so dass optisch und informationstechnisch, eindeutige Informationsträger realisiert sind.

Die Gruppe von Informatonsträgern kann ebenfalls in einem Lesegerät oder mittels einem einen Flächensensor aufweisenden Gerät ausgelesen werden. Vorteilhafterweise kann die Gruppe von Informationsträgern miteinander kombiniert werden, wobei mehrere Informationsträger auch übereinander oder nebeneinander auf einem Flächensensor positioniert und ausgelesen werden können. In einer bevorzugten Ausführungsform ist der Elektrolyt ein Salz ausgewählt aus der Gruppe umfassend anorganische, organische Salze, Doppelsalze und/oder Komplexsalze.

Ein Salz bezeichnet im Sinne der Erfindung insbesondere eine heteropolare Verbindungen, an deren Kristallgitter mindestens eine von Wasserstoff-Ionen (Protonen) verschiedene Kationenart und mindestens eine von Hydroxid-lonen verschiedene Anionenart beteiligt sind. Anorganische Salze (Metallsalze) entstehen aus den Elementen oder bei der Reaktion von Metallen, Metalloxiden, -hydroxiden oder - carbonaten mit Säuren oder Anhydriden sowie bei der Reaktion von Metallsalzen untereinander oder durch Redoxreaktion von Metallsalzen mit Elementen. Anorganische Salze umfassen beispielsweise 2AlCl₃ , FeC1₂, MgSO₄, AlBr₃, Ca(NO₃)₂, Na₂CO₃, CuC1₂ oder NaBr. Als reziproke Salzpaare bezeichnet man solche Salzpaare, die durch doppelte Umsetzung unter Bildung von zwei anderen Salzen reagieren, bei denen die Ionen gegenüber den Ausgangssalzen vertauscht sind, beispielsweise NaCl und KNO₃.

An die Stelle der Metallionen können auch Ammonium-lonen (NH₄⁺) oder die analogen organischen Ammonium-Verbindungen mit quartären Stickstoff-Atomen, Carbokationen, Sulfonium-, Phosphonium-, Diazonium- und andere Onium-Verbindungen sowie metallorganische Komplexkationen wie Ferrocenium treten.

Als Anionen können in Salzen auch organische Säurereste, z. B. von Carbon-, Fettund Sulfonsäuren, oder Phenolat-Reste fungieren, die so Metallseifen ausbilden. In Abgrenzung zu den wasserlöslichen Natrium- und Kaliumsalzen, der gesättigten und ungesättigten natürlichen und synthetischen Fettsäuren, Harzsäuren und Naphtensäuren bezeichnet man die wenig wasserlöslichen Metallsalze dieser Säuren als Metallseifen (siehe Tabelle). Die Metallseifen haben einen Schmelzpunkt zwischen 15 und 200°C. Sie sind zum Teil gut löslich in Fetten und fetten Ölen. Metallseifen kommen als Pulver, gelöst in organischen Lösemitteln oder als wässrige Dispersionen in den Handel. Die am häufigsten eingesetzten Metallseifen sind mit Lithium, Aluminium, Magnesium, Calcium, Mangan, Eisen, Zirconium, Cerium, Zink, Cobalt und Vanadium als Kation formuliert.

**Tabelle: Klassifizierung von Metallseifen.**

| | |
|---|---|
| neutrale Seifen | (R-COO⁻)₂ M²⁺ oder |
| | (R-COO⁻)₃ M³⁺ |
| saure Seifen | (R-COO⁻)₂M²⁺ · R-COOH oder |
| | (R-COO⁻)₃ M³⁺ · R-COOH |
| basische Seifen | (R―COO⁻)₃ (M²⁺)₂ · ⁻OH |
| organische Komplex- oder Mischseifen | (R¹-COO⁻) (R²-COO⁻) M²⁺ oder |
| | (R¹-COO⁻) (R²-COO⁻) (R³―COO⁻) M³⁺ |
| anorganisch-organische Komplex- bzw. Mischseifen | (R-COO⁻)₂ (CO₃²⁻) (M²⁺)₂ |
| | [(R-COO⁻) M²⁺O⁻]₃-X |

| | |
|---|---|
| M = Metallion; R―COO⁻ = Carbonsäure-Rest; X = z. B. Phosphor oder Bor | |

Sehr elektrophile Kationen bilden nur mit besonders schwach koordinierenden Anionen stabile Salze, z. B. [Hg(CO)₂][Sb₂F₁₁]₂. Organische Verbindungen, die im gleichen Molekül positive und negativ geladene funktionelle Gruppen besitzen, können sogenannte innere Salze bilden; Beispiel: Betaine, Sydnone und andere Zwitterionen. Eine Gruppe von Salzen, die besonders in der Pharmakologie und der Farbstoffchemie eine Rolle spielen, sind Addukte aus Säuren an Amine, Alkaloide und andere basische Verbindungen, z. B. Hydrohalogenide. Salze sind, in Abhängigkeit von der Eigenfarbe der in ihnen vorhandenen lonenart, farblos oder farbig.

Bei der Auflösung von Salz in Wasser dissoziieren sie als Elektrolyte in Kationen und Anionen; Beispiel: Natriumnitrat (NaNO₃) zerfällt in Wasser in positiv geladene Natrium-Ionen und in negativ geladene Nitrat-Ionen (Säurerest-Ionen).

Man unterscheidet bei den Salzen zwischen neutralen (normalen), sauren und basischen Salzen. Bei den neutralen Salzen (Neutralsalze) sind alle ionisierbaren Wasserstoff-Atome der Säure (von der sich das Salz herleitet) durch andere Kationen bzw. alle Hydroxid-Gruppen der Base (von der sich das Salz herleitet) durch andere Anionen ersetzt. Ein großer Teil der normalen Salze reagiert in wäßriger Lösung neutral; Salze können aber auch alkalisch (z. B. Trinatriumphosphat, Natriumcarbonat, Kaliumcarbonat, Kaliumcyanid) oder sauer reagieren [z. B. Eisen(III)-chlorid, Eisen(II)-sulfat, Kupfersulfat].

Bei den sauren Salzen sind nicht alle in wäßriger Lösung ionisierbaren WasserstoffAtome der Säure durch Metallionen ersetzt; Beispiel: Natriumhydrogencarbonat (NaHCO₃) oder Natriumdihydrogenphosphat (NaH₂PO₄). Saure Salze reagieren mit Lackmus häufig (aber durchaus nicht immer) sauer; NaHCO₃ und Na₂HPO₄ reagieren nahezu neutral.

Bei den basischen Salzen sind nicht alle in wäßriger Lösung als Hydroxid-lonen abspaltbaren Hydroxid-Gruppen der salzbildenden Basen durch Säurereste ersetzt; Beispiel: basisches Zinknitrat [Zn(OH)NO₃], basisches Aluminiumacetat [Al(OH)(O-CO-CH₃)₂] und andere Hydroxidsalze (früher: Hydroxysalze). Zu den basischen Salzen zählen auch die Oxidsalze (früher: Oxysalze), die sowohl Säureanionen als auch oxidierenden Sauerstoff enthalten; Beispiel: Bismutchloridoxid (BiOCl) oder SbO(NO₃). Daneben gibt es basische Salze mit nichtstöchiometrischer Zusammensetzung; Beispiel: Patina.

Viele Salze binden Kristallwasser in stöchiometrischen Mengenverhältnissen.

Die oben genannten einfachen Salze entstehen, wenn eine Säure durch nur eine Base (oder umgekehrt) neutralisiert wird; gemischte Salze dagegen bilden sich, wenn eine mehrwertige Base durch mindestens zwei verschiedene Säuren neutralisiert wird; Beispiel: Chlorkalk [Ca(OCI)CI]. Ein Beispiel für den umgekehrten Fall (Neutralisation einer mehrwertigen Säure durch mindestens zwei verschiedene Basen) ist Magnesiumammoniumphosphat (MgNH₄PO₄).

Mit den gemischten Salzen verwandt sind die Doppelsalze vom Typ des Alauns [KAl(SO₄)₂] oder Carnallits (MgCl₂ · KCI). Eine sehr große Gruppe von Salzen bilden die Komplexsalze. Kristallisieren aus Lösungen oder Schmelzen zwei oder mehr Salze in einem einfachen stöchiometrischen Verhältnis unter Bildung eines besonderen Kristallgitters, welches die Ionen beider Salze enthält (gegebenenfalls auch als Mischkristall), so liegt im Sinne der Erfindung insbesondere ein Doppelsalz vor. Doppelsalze zerfallen bevorzugt bei der Auflösung in Wasser ganz oder vorwiegend in die Ionen der Salze, aus denen sie sich aufbauen. Doppelsalze umfassen Kainit, Alaune, Carnallit oder Ammoniumeisen(II)-sulfat. Die Doppelsalze gehören ähnlich wie Ammin-Salze, Hydrate, Komplexsalze und Säure-Additionsverbindungen zu den Verbindungen höherer Ordnung. So kann man z. B. Verbindungen wie Kryolith (Natriumhexafluoroaluminat) oder Kaliumhexachloroplatinat als Doppelsalze oder als Alkalisalze anionischer Hexahalogenometallat-Komplexe auffassen.

Komplexsalze sind im Sinne der Erfindung insbesondere ionische Komplexe, die sich insbesondere aus zwei Komponenten bilden, deren Lösungen neue Eigenschaften aufweisen und nicht die Reaktionen der eingesetzten Komponenten zeigen. Komplexsalze umfassen beispielweise Na₃[AlF₆] Fe³⁺, Na₃[FeF₆], [Zn(H₂O)₄]²⁺, [Fe(NH₃)₆]²⁺ oder [Ba(H₂O)₈]²⁺.

Das Substrat kann bevorzugt Papier, Karton, Holzwerkstoffe, Verbundwerkstoffe, Laminate und/oder Kunststoffe umfassen. Es ist weiterhin bevorzugt, dass der Informationsträger Merkmale und/oder Elemente aufweist, die auf oder angebracht werden, welche zusätzliche optische Informationen beinhalten, insbesondere aufgedruckte Werte, Symbole, Zeichen, Sicherheits- und/oder Echtheitsmerkmale, insbesondere auf Druckprodukten.

Es ist bevorzugt, dass der Elektrolyt eine Suspension, eine Emulsion, ein Schaum, ein Pulver, ein Sol, ein Aerogel oder ein Aerosol ist. Eine Emulsion bezeichnet im Sinne der Erfindung insbesondere ein disperses System von zwei oder mehreren miteinander nicht mischbaren Flüssigkeiten. Die eine der flüssigen Phasen bildet dabei das Dispersionsmittel (auch: äußere, kontinuierliche oder zusammenhängende Phase), in dem die andere Phase (auch: innere oder disperse Phase) in Form feiner Tröpfchen verteilt ist. In Abhängigkeit von der Größe der dispergierten Teilchen und von der kinetischen bzw. thermodynamischen Stabilität spricht man von Makro- (auch: grob-dispers) und Mikroemulsion (auch: kolloid-dispers). Der Teilchendurchmesser schwankt dabei zwischen 10⁻⁴ und 10⁻⁸ cm, die meisten Emulsionen zeigen jedoch eine uneinheitliche Teilchengröße und sind polydispers. Je nach Größe der dispergierten Teilchen sind Emulsionen milchig trüb (Makroemulsion) bis klar (Mikroemulsion).

Eine Suspension bezeichnet im Sinne der Erfindung insbesondere ein heterogenes Stoffgemisch aus einer Flüssigkeit und darin fein verteilten Feststoffen, die in der Flüssigkeit in einer Schwebe gehalten werden.

Ein Aerosol beschreibt im Sinne der Erfindung insbesondere ein kolloides System aus Gasen (z. B. Luft) mit darin verteilten kleinen festen oder flüssigen Teilchen (sogenannten Schwebstoffen) von etwa 10 µm bis 1 nm Durchmesser. Aerosolteilchen können (z. B. durch dipolare oder unipolare Diffusion von Klein-Ionen) elektrisch aufgeladen sein oder (z. B. durch Photoeffekt oder Photodissoziation entstanden oder durch Einwirkung von elektrischen Entladungen erzeugt) selbst Ionen darstellen. Aerosole sind insbesondere instabile kolloide Systeme.

Ein Schaum bezeichnet im Sinne der Erfindung insbesondere ein Gebilde aus gasgefüllten, kugelförmigen oder polyederförmigen Zellen, welche durch flüssige, halbflüssige, hochviskose oder feste Zellstege begrenzt werden. Ist die Volumenkonzentration des Gases bei homodisperser Verteilung kleiner als 74%, so sind die Gasblasen wegen der oberflächenverkleinernden Wirkung der Grenzflächenspannung annähernd kugelförmig. Schäume sind thermodynamisch instabil, da durch Verkleinerung der Oberfläche Oberflächenenergie gewonnen werden kann. Die Stabilität und damit die Existenz eines Schaumes ist somit davon abhängig, wieweit es gelingt, seine Selbstzerstörung zu verhindern. Schäume können durch Verfestigung der aufbauenden Substanz fixiert werden (z. B. Schaumkunststoffe, Schaumstoffe). Schäume aus niedrigviskosen Flüssigkeiten werden temporär durch oberflächenaktive Substanzen (z. B. Tenside, Schaumstabilisatoren) stabilisiert. Solche Tensidschäume haben aufgrund ihrer großen inneren Oberfläche ein starkes Adsorptionsvermögen. Zur Erzeugung von Schäumen wird bevorzugt ein Gas in geeignete Flüssigkeiten eingeblasen oder man erreicht Schaumbildung durch heftiges Schlagen, Schütteln, Verspritzen oder Rühren der Flüssigkeit in der betreffenden Gasatmosphäre, vorausgesetzt, dass die Flüssigkeiten geeignete Tenside oder andere grenzflächenaktive Stoffe enthalten, die außer Grenzflächenaktivität auch ein gewisses Filmbildungsvermögen besitzen.

Ein Pulver bezeichnet im Sinne der Erfindung insbesondere eine Form eines trockenen und festen Stoffes, die man durch Zerkleinern, d. h. Zerreiben oder Zerstoßen in der Reibschale (Pulverisieren), Mahlen in Mühlen oder als Folge von Zerstäubungstrocknungen oder Gefriertrocknungen erhält. Eine besonders feine Zerteilung nennt man oft Atomisierung oder Mikronisierung. Nach der Korngröße ist eine grobe Einteilung der Pulver in Grobpulver, Feinpulver und Feinstpulver bevorzugt.

Ein Sol bezeichnet im Sinne der Erfindung insbesondere eine kolloidale Lösung, in der ein fester oder flüssiger Stoff in feinster Verteilung in einem festen, flüssigen oder gasförmigen Medium dispergiert ist. Bei gasförmigen Dispersionsmedien spricht man von Aerosolen, bei festen von Vitreosolen, bei flüssigen von Lyosolen. Lyosole unterteilt man weiter in Organosole und Hydrosole (Beispiel: Kieselsol), je nachdem, ob es sich um eine Suspension in organischer oder wäßriger Phase handelt. Durch Koagulation (Flockung, Ausflockung) geht ein Sol in ein Gel über, wobei es gegebenenfalls zur Koazervation kommen kann. Ein Aerogel bezeichnet insbesondere ein hochporöses Material aus Siliciumoxiden oder Metalloxiden.

Es kann auch bevorzugt sein, wenn auf dem Informationsträger weitere optische, elektrische, elektronische, sensorische und/oder akustische Elemente aufgebracht sind.

Vorteilhafterweise befindet sich gemäß einer weiteren bevorzugten Ausführungsform wenigstens eine das Substrat des Informationsträgers ganz oder teilweise überdeckende Deckschicht. Die Deckschicht kann vorteilhafterweise als Schutz oder Unkenntlichmachung der Struktur des Informationsträgers verwendet werden. In einer bevorzugten Variante kann diese Deckschicht auch als Deckplatte ausgeführt sein. Die Deckplatte kann aus starren oder flexiblen Materialien bestehen.

Die Erfindung betrifft auch ein Verfahren zur Herstellung eines Informationsträgers, umfassend die folgenden Schritte:
a. Herstellen eines Elektrolyten,
b. Bereistellen eines elektrisch nicht leitenden Substrats,
c. Aufbringen des Elektrolyten auf das Substrat mitels einem Druckverfahren, wobei bereichsweise ein Kontakt zwischen dem Elektrolyt und dem Substrat entsteht.

Durch das Verfahren kann kostengünstig und schnell ein Informationsträger bereitgestellt werden, der vorzugsweise kapazitiv auslesbar ist. Vorteilhafterweise ist der Informationsträger durch Massendruckverfahren herstellbar. Der bereitgestellte Elektrolyt kann einfach und schnell mittels einem Druckverfahren auf das Substrat auf- oder in dieses eingebracht werden, wobei dieser dann bevorzugt als strukturierte Elektrolytschicht vorliegt. Druckverfahren sind alle Verfahren, mit denen Elektrolyte auf Substrate auf- und/oder eingebracht werden können. Druckverfahren bezeichnen im Sinne der Erfindung insbesondere Verfahren zum Drucken oder Vervielfältigen. Druckverfahren umfassen beispielsweise: mechanische Druckverfahren, photomechanische Druckverfahren oder elektrostatische Kopierverfahren, insbesondere Hochdruck-, Tiefdruck-, Flachdruck- oder Offset-Verfahren.

Vorteile des Informationsträgers umfassen:
● Sowohl anwendbar auf saugfähige als auch nicht saugfähige Untergründe
● Größere Substratrauigkeit ist tolerierbar
● Mit nahezu jedem (Druck-)Verfahren aufbringbar
● Unsichtbar
● Sehr umweltfreundlich
● Extrem preiswert
● Extrem viele Materialien kommen in Frage
● Material ist färbbar
● Sehr biege- und knicktolerant
● Ist sofort und mühelos überdruckbar, es entstehen keine Saugfähigkeitsoder Benetzungsunterschiede auf dem Substrat
● Kann mittels handelsüblichen Digitaldruckern (z.B. Inkjet) sofort individualisiert werden
● Kleinste Stückzahlen können so realisiert werden bis Volumenfertigungen

Die Erfindung wird nunmehr anhand von Beispielen beschrieben, ohne jedoch auf diese beschränkt zu sein.

### Beispiel 1:

Informationsträger, deren Herstellung und deren Verwendungen sind dem Fachmann bereits aus der WO 2010/051802, der WO 2010/043422 und/oder der EP 10075337.5 bekannt. Im Folgenden wird die Herstellung eines Informationsträgers beispielhaft erläutert, wobei der Informationsträger als strukturierte Informationsschicht eine Elektrolytschicht, insbesondere eine strukturierte Elektrolytschicht aufweist.
1. Herstellen einer Salzlösung durch:
   a) Abfüllen von ca. 10g jodiertes Speisesalz (NaCI) in ein Gefäß
   b) Zugießen von ca. 40ml Leitungswasser
   c) Verrühren und Auflösen des Speisesalzes
2. Herstellen einer Informationsträgermaske durch:
   a) Bereitstellung einer Folie
   b) Informationsträgerstruktur (Positiv) gemäß Layout A mittels Skalpell aus der Folie schneiden → Maske
   c) Maske aus b) auf weißes Kopierpapier (80gr/m²) aufkleben
3. Herstellung des Informationsträgers durch:
   a) Tränken eines saugfähigen Mediums (Küchenrolle) mit Salzlösung aus 1.
   b) Aufgesogene Salzlösung auf die aufgeklebte Informationsträgermaske tupfen, dass die Salzlösung an den offenen Stellen der Maske das darunter liegende Kopierpapier im Layout A tränkt
   c) Entfernen der Maske vom Kopierpapier
   d) Salzlösung schlägt schnell weg, Kopierpapier bleibt weiß ohne Rückstände
4. Test des Informationsträgers mittels kapazitiver Leseeinrichtung:
   a) Getränktes Kopierpapier wird auf kapazitives Lesegerät gelegt, welches die Struktur des Informationsträgers gemäß Layout A fehlerfrei erkennt
   b) Informationsträger wird für einen 2. Ausleseversuch geklappt, gefaltet, gefalzt, umgebogen, zerknüllt und/oder umgeschlagen und anschließend mechanisch geglättet und analog 4. a) ausgelesen (keine bis marginale Fehler)

Für die Herstellung eines Informationsträgers nach Schritten 1-3 wurden effektiv ca. 0,1g der Lösung verwendet. Diese wurden auf eine Fläche von ca. 10 cm² des Kopierpapiers verteilt. Stellt man eine beispielhafte Lösung bei 20°C Umgebungstemperatur her aus 359g NaCI und 1000g Wasser erhält man 1359g Salzlösung. Diese würde mit dieser einfachen Technik für 13590 Informationsträger oder eine betupften/bedruckten Fläche von 13,59m² reichen.

Selbst unter Zuhilfenahme von Hilfsstoffen um die Lösung für konkrete Additivverfahren hinsichtlich Viskosität etc. einzustellen, erreicht man eine absolut preisgünstige Lösung zur Herstellung dieser Informationsträger.

Additive oder Hilfsstoffe umfassen im Sinne der Erfindung insbesondere:
- Verarbeitungshilfsmittel wie Dispergiermittel, Verdickungsmittel und Emulgatoren,
- Bindehilfsmittel wie Härter (sog. Co-Härter zum Einstellen eines spezifischen Eigenschaftsprofils, Lösemittel (z.B. sog. Co-Lösemittel in wässrigen Lacken und Verdünnungsmittel),
- Trockenstoffe (Sikkative),
- Trocknungsmittel und Befeuchtungsmittel,
- Zuschlagstoffe, Betonzusatzstoffe,
- Weichmacher,
- Lichtschutzmittel (UV-Absorber und / oder Radikalfänger),
- Verlaufsmittel für eine möglichst glatte Lackoberfläche,
- Entschäumer und Entlüfter,
- Mattierungsmittel,
- Triebmittel zur Schaumbildung,
- Hautverhinderungsmittel,
- Korrosionsschutzmittel, Enthärter und Biozide,
- Konservierungsmittel und Antioxidationsmittel,
- Nahrungsmittelzusatzstoffe und Futtermittelzusatzstoff wie Mineralien, Vitamine und Farbstoffe,
- Antistatika,
- Flammschutzmittel,
- Adsorptionsmittel,
- Verschnittmittel,
- Pigmente,
- Funktionelle Füllstoffe,
- Entschäumer,
- Netzmittel,
- Dispergiermittel,
- Thixotropiermittel,
- Verdicker,
- Rheologieadditive,
- Viskositätseinsteller,
- Primer,
- Trennmittel,
- Geliermittel,
- Tenside und/oder
- Fotoaktive Substanzen (z.B. Fotoinitiatoren).

### Beispiel 2:

Herstellung eines Informationsträgers.
1. Herstellung eines Informationsträgers mit Layout A analog Beispiel 1
2. Herstellung eines Informationsträgers mit Layout A gemäß WO 2010/051802, WO 2010/043422 und/oder EP 10075337.5.
3. Halbierung der Informationsträgers aus Beispiel 1 und Halbierung der Informationsträgers aus Punkt 2 mittels Schere
4. Zusammenkleben der Informationsträgerhälften zu Layout A welches nun zur Hälfte aus 1. und zur Hälfte aus 2. besteht
5. Auslesen mit kapazitivem Lesegerät
6. Ergebnis:
   a) Informationsträger gemäß Layout A wird erkannt
   b) Unterschiedliche Qualität der Informationsträgerhälften
   c) selektive Informationsunterscheidung möglich

Vorteil: Mit bisherigen Techniken geht nur 1 oder 0 zu unterscheiden. Nun kann man aber 0, 1 (Salzlösung 1 mit Pegel 1) und 2 (Kaltfolie mit Pegel 2) erkennen. Das heißt bei gleichem Flächenbedarf steigt die Datendichte immens.

### Beispiel 3:

Der Laborversuch 2 wurde anstatt Kaltfolie mit einer weiteren Salzlösung (10 g Magnesiumchlorid in 40g Wasser) erneut durchgeführt (= Laborversuch 3) mit gleichem Ergebnis. So sind selektive Informationsunterschiede möglich. Ein Informationsträger nach Laborversuch 2 würde demnach einen Teil der Information sichtbar erschließen (Salzlösung ist auf Papier unsichtbar, nur Kaltfolie ist sichtbar). In Laborversuch 3 ist der Informationsträger analog zu Laborversuch 1 komplett unsichtbar, enthält aber 3 verschiedene Zustandsmöglichkeiten (0, 1 und 2) der Bits. Damit können auf gleicher Fläche deutlich mehr Informationen untergebracht werden.

### Beispiel 4:

Herstellung zweier Informationsträger.
1. Herstellung zweier Informationsträger mit jeweils Layout A gemäß Beispiel 1
2. In Deckung bringen der Informationsträger bzw. der Informationsschicht und mittels Klebeband fixieren
3. Auslesen mit kapazitivem Lesegerät
4. Ergebnis:
   a) Informationsträger gemäß Layout A wird erkannt
   b) Lesbarkeit/Qualität des Informationsträgers steigt im Vergleich zu Beispiel 1

Die Erfindung soll im Folgenden anhand von Figuren beispielhaft erläutert werden, ohne jedoch auf diese beschränkt zu sein. Es zeigen:
- Fig. 01: Beispiel 1 für Informationsträger mit rechteckiger Datenstruktur (Ansicht von oben)
- Fig. 02: Informationsträgerrohling mit elektrisch leitfähiger Grundstruktur
- Fig. 03: Informationsträgerrohling nach erfolgter Individualisierung mittels Additivverfahren
- Fig. 04: Beispiel 2 eines Informationsträgers
- Fig. 05: Beispiel 3 eines runden Informationsträgers
- Fig. 06: Beispiel 4 eines Informationsträgers
- Fig. 07: Beispiel 5 eines runden Informationsträgers

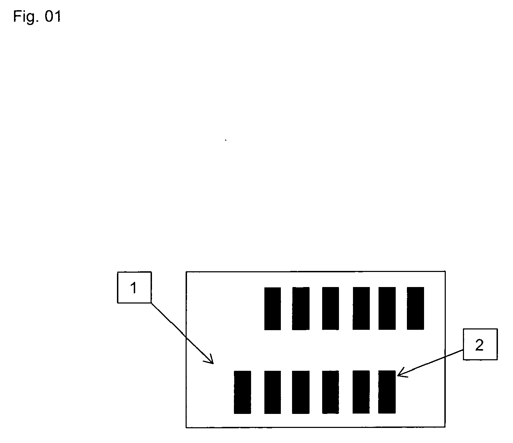

Fig. 01 zeigt einen Informationsträger nach Prinzip 1 mit rechteckiger Datenstruktur (Ansicht von oben). Ein erstes Prinzip ist exemplarisch dargelegt. Hierbei ist das Substrat 1 und die strukturierte Elektrolytschicht (beispielsweise in rechteckiger Ausführung) 2 dargestellt.

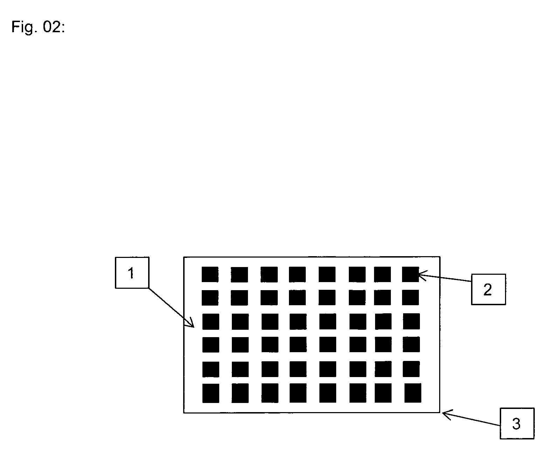

Fig. 02 zeigt einen Informationsträgerrohling 3 mit einer rechteckig strukturierten Grundstruktur der Elektrolytschicht 2. Es ist das Substrat 1 und die Elektrolytschicht 2 dargestellt.

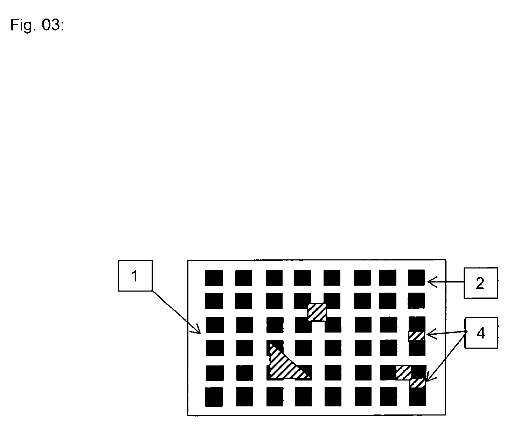

Fig. 03 stellt einen Informationsträgerrohling 3 nach erfolgter Individualisierung dar. Es ist das Substrat 1, die rechteckig strukturierte Grundstruktur der Elektrolytschicht und eine zusätzlich erzeugte Elektrolytschicht 4 aufgezeigt. Die zusätzlich aufgebrachte Elektrolytschicht 4 verbindet Teile der rechteckig strukturierten Grundstruktur.

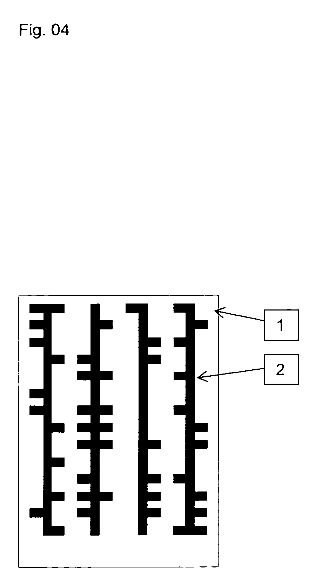

Fig. 04 zeigt ein weiteres Beispiel eines Informationsträgers. Ein Informationsträger ist dargestellt bestehend aus einem Substrat 1 und einer Elektrolytschicht 2.

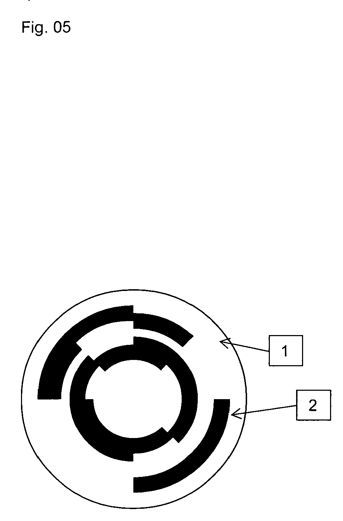

Fig. 05 zeigt ein Beispiel eines runden Informationsträgers. Der Informationsträger umfasst bevorzugt ein Substrat 1 und eine Elektrolytschicht 2.

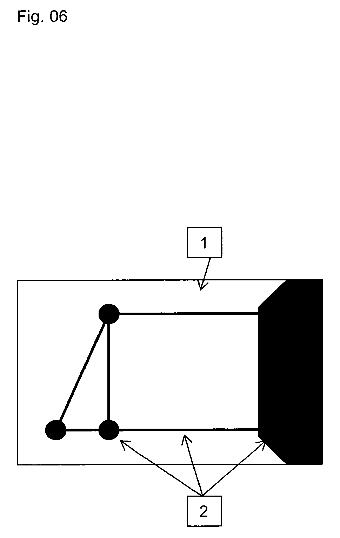

Fig. 06 zeigt ein weiteres Beispiel eines Informationsträgers. Ein Informationsträger ist dargestellt bestehend aus einem Substrat 1 und einer Elektrolytschicht 2.

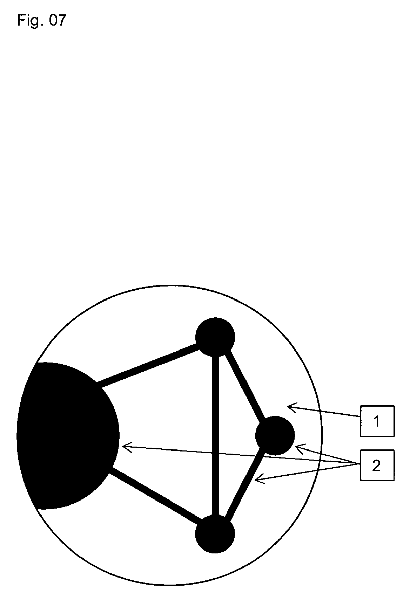

Fig. 07 zeigt ein weiteres Beispiel eines runden Informationsträgers. Der Informationsträger umfasst bevorzugt ein Substrat 1 und eine Elektrolytschicht 2.

### Bezugszeichenliste

- 1: Substrat
- 2: strukturierte Elektrolytschicht
- 3: Informationsträgerrohling
- 4: zusätzliche Elektrolytschicht

## Patentansprüche

1. Informationsträger, umfassend mindestens einen Elektrolyten und ein Substrat,
**dadurch gekennzeichnet, dass**
das Substrat eine elektrisch nicht leitfähige Schicht ist und der Elektrolyt bereichsweise auf dem Substrat auf- und/oder eingebracht vorliegt.

2. Informationsträger nach Anspruch 1,
**dadurch gekennzeichnet, dass**
das Substrat Papier, Karton, Holzwerkstoffe, Verbundwerkstoffe, Laminate und/oder Kunststoffe umfasst.

3. Informationsträger nach Anspruch 1 oder 2,
**dadurch gekennzeichnet, dass**
der Elektrolyt ein Salz ist ausgewählt aus der Gruppe umfassend anorganische, organische Salze, Doppelsalze, Mischsalze und/oder Komplexsalze.

4. Informationsträger nach einem oder mehreren der vorherigen Ansprüche, **dadurch gekennzeichnet, dass**
der Elektrolyt als Punkt, Strich, Kurve, Fläche und/oder deren Kombinationen auf das Substrat aufgebracht ist.

5. Informationsträger nach einem oder mehreren der vorherigen Ansprüche, **dadurch gekennzeichnet, dass**
der Elektrolyt eine Suspension, eine Emulsion, ein Schaum, ein Pulver, ein Sol, ein Aerogel oder ein Aerosol ist.

6. Informationsträger nach einem oder mehreren der vorherigen Ansprüche, **dadurch gekennzeichnet, dass**
der Elektrolyt fest, flüssig, gelartig oder pastös ist.

7. Informationsträger nach einem oder mehreren der vorherigen Ansprüche, **dadurch gekennzeichnet, dass**
auf dem Informationsträger weitere optische, elektrische, elektronische, sensorische und/oder akustische Elemente aufgebracht sind.

8. Informationsträger nach einem oder mehreren der vorherigen Ansprüche, **dadurch gekennzeichnet, dass**
dieser mindestens eine, das Substrat und/oder den Elektrolyt ganz oder teilweise überdeckende Deckschicht aufweist.

9. Informationsträger nach einem oder mehreren der vorherigen Ansprüche, **dadurch gekennzeichnet, dass**
dieser geklappt, gefaltet, gefalzt, umgebogen und/oder umgeschlagen vorliegt.

10. Informationsträger nach einem oder mehreren der vorherigen Ansprüche, **dadurch gekennzeichnet, dass**
der Elektrolyt strukturiert vorliegt.

11. Informationsträger nach einem oder mehreren der vorherigen Ansprüche, **dadurch gekennzeichnet, dass**
der auf- oder eingebrachte Elektrolyt bereichsweise, mittels additiver und/oder subtraktiver Verfahren, bevorzugt durch Inkjetverfahren und besonders bevorzugt durch Laserverfahren in seiner Strukturierung verändert vorliegt.

12. Informationsträger nach einem oder mehreren der vorherigen Ansprüche, **dadurch gekennzeichnet, dass**
Merkmale und/oder Elemente auf oder angebracht werden, welche zusätzliche optische Informationen beinhalten, insbesondere aufgedruckte Werte, Symbole, Zeichen, Sicherheits- und/oder Echtheitsmerkmale, insbesondere auf Druckprodukten.

13. Gruppe von Informationsträgern umfassend mehrere Informationsträger nach einem oder mehreren der vorhergehenden Ansprüche,
**dadurch gekennzeichnet, dass**
mindestens eine Farbschicht, Kleberschicht, Papierschicht und/oder Folie jeweils wenigstens als Hintergrund, Überdeckung, Zahl, Buchstabe, Zeichen, graphische Darstellung und/oder bildliche Darstellung oder einer Kombination hiervon aufgebracht ist, wobei
- mehrere Informationsträger eine gleiche Struktur des Elektrolyts und mindestens eine gleich gestaltete Farbschicht besitzen, so dass eine in sich geschlossene Gruppe von informationstechnisch und optisch gleichen Informationsträgern realisiert sind,
- mehrere Informationsträger eine gleiche Struktur des Elektrolyts und mindestens eine unterschiedlich gestaltete Farbschicht aufweisen, so dass eine Gruppe von informationstechnisch gleichen, aber optisch unterschiedlichen, Informationsträgern realisiert sind,
- mehrere Informationsträger eine ungleiche Struktur des Elektrolyts und mindestens eine gleich gestaltete Farbschicht aufweisen, so dass eine Gruppe informationstechnisch eindeutiger, aber optisch gleicher, Informationsträger realisiert sind,
- mehrere Informationsträger eine ungleiche Struktur des Elektrolyts und mindestens eine ungleich gestaltete Farbschicht aufweisen, so dass optisch und informationstechnisch, eindeutige Informationsträger realisiert sind.

14. Verwendung eines Informationsträgers nach den Ansprüchen 1 bis 12 als Informationsspeicher,
**dadurch gekennzeichnet, dass**
der Informationsträger kapazitiv auslesbar ist.

15. Verwendung eines Informationsträgers, nach Anspruch 14,
**dadurch gekennzeichnet, dass**
der strukturierte Elektrolyt durch eine Leseeinrichtung, deren Elektrodenanordnungen so ausgebildet und angeordnet sind, dass die Anzahl, Größe, Form und/oder Lage des strukturierten Elektrolyts des Informationsträgers erkannt, erfasst und datentechnisch weiterverarbeitet wird.

16. Verwendung eines Informationsträgers nach Anspruch 14 oder 15,
**dadurch gekennzeichnet, dass**
der strukturierte Elektrolyt durch einen Flächensensor und/oder ein einen Flächensensor beinhaltendes Gerät erkannt, erfasst und datentechnisch weiterverarbeitet wird.

17. Verfahren zur Herstellung eines Informationsträgers, umfassend die folgenden Schritte:
a. Herstellen eines Elektrolyten,
b. Bereistellen eines elektrisch nicht leitenden Substrats,
c. Aufbringen des Elektrolyten auf das Substrat mittels einem Druckverfahren, wobei bereichsweise ein Kontakt zwischen dem Elektrolyt und dem Substrat entsteht.
